# FASCICULE DE BREVET EUROPEEN

(11) **EP 1 548 558 B1**
(45) Date de publication et mention de la délivrance du brevet: **29.11.2017**
(21) Numéro de dépôt: 04292853.1
(22) Date de dépôt: 02.12.2004
(51) Int. Cl.: G06F 3/01, G06F 3/0481

(54) **Méthode de modélisation graphique et comportementale, tridimensionnelle d'au moins deux objets**
Verfahren zur Graphische-, Verhaltens- und Dreidimensionalmodellierung von mindestens zwei Objekten
Method to model graphically, behaviourally and three-dimensionally at least two objects

(30) Priorité: 10.12.2003 FR 0314480
(43) Date de publication de la demande: 29.06.2005
(73) Titulaire: Nexter Training, 78034 Versailles (FR)
(72) Inventeur: Arnaldi, Bruno, 35700 Rennes (FR); Tisseau, Jacques, 29200 Brest (FR); Mollet, Nicolas, 35700 Rennes (FR); Devillers, Frédéric, 29200 Brest (FR); Cazeaux, Eric, 31550 Cintegabelle (FR); Maffre, Eric, 29280 Loc Maria Plouzané (FR)
(74) Mandataire: Célanie, Christian

(56) Documents cités:
- EP-A- 1 037 134
- US-A- 5 563 988
- US-A- 5 999 185
- US-A1- 2002 163 497
- US-A1- 2003 085 866
- LI J R ET AL: "Desktop virtual reality for maintenance training: an object oriented prototype system (V-REALISM)" COMPUTERS IN INDUSTRY, ELSEVIER SCIENCE PUBLISHERS. AMSTERDAM, NL, vol. 52, no. 2, octobre 2003 (2003-10), pages 109-125, XP004454727 ISSN: 0166-3615
- HAY D.C.: "Data Model Views", THE DATA ADMINISTRATION NEWSLETTER , pages 1-11, Retrieved from the Internet: URL:http://www.tdan.com/view-articles/4850 / [retrieved on 2000-04-01]

## Description

Le secteur technique de la présente invention est celui des méthodes de modélisation graphique et comportementale, tridimensionnelle, réactive, et interactive encore nommés environnements de réalité virtuelle.

Il est connu d'utiliser la réalité virtuelle pour modéliser un environnement ou des objets. On s'attache à modéliser les objets du monde réels par des objets virtuels. Ces objets réels présentent des propriétés intrinsèques : position, orientation, matériau, forme, volume, couleur, masse, inertie, dureté... etc. Ces objets peuvent interagir entre eux selon des relations réelles : contact, support, fixation, assemblage vissé... La modélisation s'attache à modéliser les objets dans leurs propriétés intrinsèques ainsi que dans leur comportement propre ou en interaction avec d'autres objets. Il est connu, de même, de permettre à un opérateur de pénétrer dans ce monde virtuel ainsi modélisé, au moyen d'un opérateur virtuel, afin d'y prendre place et de pouvoir interagir avec les objets virtuels de ce monde pour toucher ou déplacer. La perception principale de ce monde dont dispose l'opérateur est visuelle. Il peut s'agir d'une vision classique, telle une fenêtre sur le monde virtuel, représentée sur un écran, ou d'une immersion où l'opérateur réel voit ce que verrait l'opérateur virtuel qui le représente dans le monde virtuel.

Il est connu de représenter chacun de ces objets réels par un objet virtuel reprenant les caractéristiques et les comportements de l'objet réel. On s'attache tout particulièrement à modéliser les caractéristiques et les comportements physiques (géométrie, aspect, contacts, positionnement relatif, déplacements, gravité...). Lorsqu'on traite de la modélisation des relations ou interactions entre ces objets et de la modélisation de l'opérateur, plusieurs approches existent.

L'approche manuelle consiste à définir individuellement chaque interaction. Ceci peut être réalisé par programmation combinatoire. Chaque configuration de relation possible est traitée par un programme dédié. La qualité du processus global est alors directement liée à la qualité de l'expertise du programmeur et à sa capacité d'appréhender la complexité de l'environnement. Le programmeur gère manuellement la combinatoire des interactions, généralement par des enchaînements de tests multiples, qui valident le déclenchement d'une action, puis réalisent ce déclenchement. La nécessaire gestion manuelle de la combinatoire constitue un inconvénient per se, qui entraîne un manque de généricité dans la spécification des interactions. Chaque modification ou complément, remet en cause l'ensemble de l'édifice, et peut conduire à l'effondrement total. La stabilité du processus complet n'est aucunement garantie.

Une autre approche, visant à systématiser le traitement des relations entre les objets, est l'utilisation de Représentations d'Actions Paramétriques (RAP ou PAR en anglais) développée par Norman BADLER de l'université de Pennsylvanie (EUA). Dans cette approche, les PAR permettent une description des interactions réalisables entre un agent humanoïde (opérateur) et des objets virtuels. Le système comprend un ensemble de PAR, parmi lequel est recherché celui qui permet de répondre à une commande donnée. Un PAR comprend les caractéristiques suivantes :
- l'« agent » qui va exécuter l'action
- la liste des objets virtuels qui seront concernés par l'action,
- la liste des conditions nécessairement vraies pour réaliser l'action,
- des spécifications préparatoires (Preparatory Specifications), listant des couples (condition, action) qui prépare l'action principale du PAR,
- la description de l'action,
- la liste des conditions pour terminer l'action,
- des assertions postérieures (Post Assertions), décrivant les effets pour mettre à jour la base de données à la fin de l'action.

Cette approche, si elle a le mérite de poser une base de systématisation du traitement des relations entre objets virtuels, présente l'inconvénient majeur de ne traiter que des interactions potentielles entre des objets virtuels et un humanoïde virtuel.

Une autre approche, dite des objets intelligents (Smart Objects en anglais), développée dans la thèse auprès de l'Ecole Polytechnique Fédérale de Lausanne de Marcello Kallmann, propose une manière de décrire les interactions entre un humanoïde et des objets. Le principe fondamental consiste à déporter l'information sur les interactions ou relations dans l'objet virtuel. L'objet comprend alors :
- une description des propriétés de l'objet,
- les informations d'interactions avec l'agent,
- le comportement de l'objet en réaction à chaque interaction,
- le comportement attendu de l'agent pour l' interaction.
Cette approche présente l'inconvénient majeur de ne traiter que des interactions potentielles entre des objets virtuels et un humanoïde virtuel. Une autre difficulté provient du fait que l'information d'interaction étant répartie au sein des différents objets interagissant, il peut être délicat de décrire une interaction. Certaines interactions se décrivent beaucoup plus facilement à l'aide d'un opérateur centralisé agissant sur le ou les objets en interaction.

Une autre approche, dite du simulateur mécanique, permet de gérer des interactions entre plusieurs objets. On cite par exemple un détecteur de collision centralisé qui aura pour but de tester et d'informer si des objets sont en collision. Un autre simulateur centralisé permettra de gérer une évolution sur l'inertie des objets en mouvement, afin de simuler ces mouvements relatifs des objets virtuels ou encore de gérer des contraintes mécaniques liants des objets virtuels. L'approche de ces simulateurs se caractérise par un opérateur centralisé ayant une vision globale de l'ensemble de l'environnement. Ces simulateurs doivent disposer des informations suffisantes sur les objets en jeu dans l'interaction.

L'inconvénient majeur de cette approche réside dans le fait que dans un environnement virtuel, la diversité des types d'interaction ne permet pas de les gérer exclusivement par des simulateurs mécaniques centralisés.

Une autre approche est celle dite des interacteurs. Cette approche décrite dans les travaux de T. Duval visent à fournir une manière générique de décrire les interactions entre des objets virtuels. L'opérateur interagit avec le monde virtuel uniquement au travers d'un avatar. Ce dernier est traité comme tout objet virtuel. Pour que deux objets puissent interagir entre eux, ils doivent disposer du même protocole de communication. Ce protocole de communication vient entourer un objet sans le modifier. L'interaction est décrite au travers du protocole. Un même objet peut avantageusement cumuler plusieurs protocoles. Ceci offre la possibilité pour un objet de devenir multi-interactif. Cette approche présente l'inconvénient majeur de ne traiter que des interactions potentielles entre des objets virtuels et un humanoïde virtuel.

L'état de la technique présente principalement les inconvénients suivants. Certaines approches distinguent nécessairement l'opérateur virtuel, des autres objets virtuels. Ceci constitue un traitement particulier plutôt limitatif. Le principe des objets intelligents peut être étendu en ne s'appliquant pas seulement à un opérateur pilote, mais plutôt à un objet pilote. Ceci entraîne cependant d'autres problèmes de traitements spécifiques, selon le type d'objet pilote. De plus, cette technique conduit à des difficultés de description complexe des interactions. Enfin, le choix de l'objet pilote reste arbitraire notamment dans le cas d'une interaction fortement combinée. La ou les approches centralisées présentent l'avantage d'assurer la cohérence et de bien s'appliquer aux interactions mécaniques. Elles présentent l'inconvénient de devenir difficile à décrire dans la plupart des cas et de très mal réagir à des modifications locales, principalement dans les situations d'émergence de cas non prévus. Les protocoles d'interaction, (approche interacteur) posent le problème de la localisation de l'interaction, lorsque celle-ci est fortement combinée. Il est possible de la retrouver dans le protocole, mais celui-ci est réparti entre les objets.

Sur un autre plan, les méthodes de modélisation ainsi réalisées sont peu modulaires, difficilement augmentables, peu stables. Une modification locale peut remettre en cause l'existant et entraîner un dysfonctionnement. Il en résulte une faible capitalisation de l'acquis lors d'un développement. La combinatoire des interactions, exponentielle en fonction du nombre d'objets virtuels par nature, est difficilement compatible avec un traitement efficace. Ces méthodes font trop souvent apparaître un cas particulier en différentiant l'humain opérateur des autres objets de l'environnement.

La présente invention répond à ces différents problèmes en utilisant une modélisation particulièrement avantageuse qui permet d'unifier le traitement des objets réels et des relations qui sont tous deux modélisés par des objets virtuels hiérarchiques comprenant des activités et des capacités. Un gestionnaire centralisé de relation assure la détection et la réalisation des interactions définies par les relations. Enfin, l'opérateur interagit au moyen d'un objet virtuel semblable aux autres objets virtuels de l'environnement.

Le document US2002/0163497 décrit un environnement de réalité virtuelle dans une application d'entraînement à la palpation à but thérapeutique à l'aide d'un ordinateur mettant en oeuvre une représentation graphique du corps humain. On décrit un objet virtuel contrôlant un curseur en relation avec la souris manipulée par un opérateur. Aucune méthode de modélisation n'est décrite.

L'invention a pour objet une méthode de modélisation selon la revendication 1. Selon une caractéristique de l'invention, un objet virtuel comprend au moins une capacité, comprenant une activité visible située dans le corps, utilisable par les autres objets virtuels, au moyen d'une interface de communication située dans l'interface définissant des relations que l'objet virtuel peut établir avec d'autres objets virtuels.

Selon une autre caractéristique de l'invention, un objet virtuel comprend au moins une activité cachée située dans le corps, définissant des relations internes à l'objet virtuel.

Selon encore une autre caractéristique de l'invention, un des objets virtuels est hiérarchiquement lié à un objet virtuel supérieur ou parent, dont il hérite les activités et capacités.

Selon encore une autre caractéristique de l'invention, une relation virtuelle établit une relation entre des objets virtuels de l'environnement possédant des capacités associables, en réalisant une interaction et en transmettant aux objets virtuels les paramètres nécessaires à l'accomplissement de cette interaction.

Selon encore une autre caractéristique de l'invention, la méthode met en oeuvre un gestionnaire central de relations qui confronte les objets virtuels entre eux afin de détecter des capacités associables, indicatives de possibles interactions entre ces objets virtuels.

Selon encore une autre caractéristique de l'invention, on modélise un opérateur réel par un avatar ou opérateur virtuel, interagissant avec les objets virtuels de l'environnement et en ce que cet avatar est un objet virtuel.

L'invention concerne de plus l'application d'une méthode de modélisation à la formation pour la maintenance de matériels ou de véhicules.

Un avantage de la méthode selon l'invention est la modularité. Tous les éléments de l'environnement, objets ou relations sont modélisés par des objets modulaires. Ils sont ensuite combinés entre eux de manière souple et dynamique.

Un autre avantage de la méthode selon l'invention est que les éléments ne sont pas figés. L'environnement est dit augmentable. De nouvelles propriétés peuvent être ajoutées de manière souple, sans remise en question de ce qui fonctionne déjà ou de l'ensemble de l'architecture. Une simple modification locale n'entraîne pas de problème de stabilité ou de dysfonctionnement de l'existant.

Un autre avantage de la méthode selon l'invention est que les développements sont capitalisables. Un objet ou une relation étant modélisés de manière intrinsèque, indépendamment du reste de l'environnement, et ne comportant pas de développement spécifique, devient facilement réutilisable.

Un autre avantage de la méthode selon l'invention est de permettre une auto-information du système. Le fait de décrire les relations évite le traitement au cas par cas. Il permet d'obtenir un système capable de raisonner seul pour gérer lui-même la combinaison des interactions et ainsi réduire la combinatoire de ces interactions.

Un autre avantage de la méthode selon l'invention est d'augmenter la généricité de l'interaction en assimilant l'opérateur à un objet standard et en standardisant la relation objet/objet.

D'autres caractéristiques, détails et avantages de l'invention ressortiront plus clairement de la description détaillée donnée ci-après à titre indicatif en relation avec des dessins sur lesquels :
- la figure 1 représente le principe de modélisation du monde par un environnement virtuel,
- la figure 2 est une représentation schématique d'un objet virtuel,
- la figure 3 illustre le principe d'une relation virtuelle,
- la figure 4 illustre le détail d'une relation virtuelle,
- la figure 5 illustre le principe d'héritage entre objets, et
- la figure 6 présente le mode de fonctionnement du gestionnaire de relations.

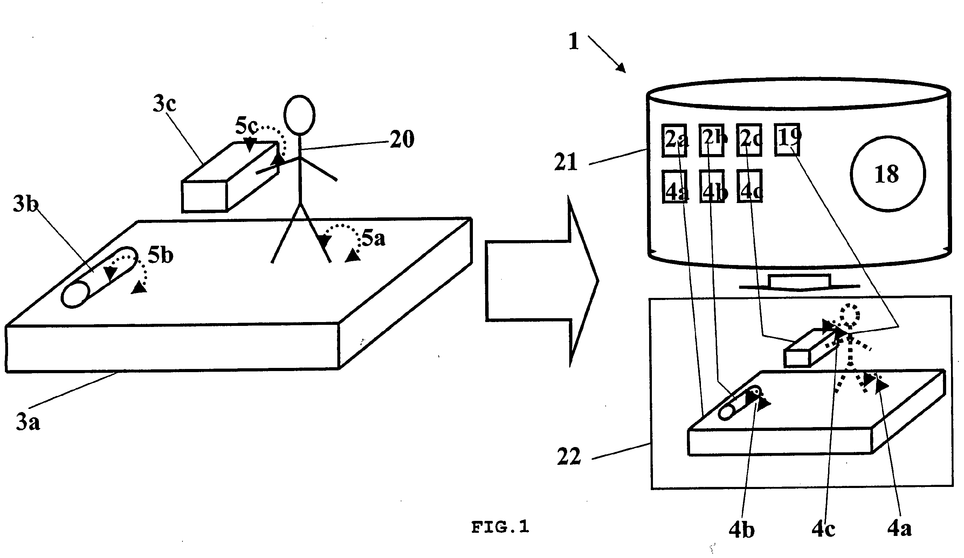

Sur la figure 1, un exemple d'environnement réel est représenté. Il comprend un opérateur réel 20 et des objets réels 3a, 3b, 3c. Il existe des relations réelles 5a, 5b, 5c entre cet opérateur réel 20 et les objets réels 3a, 3b, 3c et entre les objets réels entre eux. Ainsi par exemple, on retiendra les trois relations réelles suivantes :
- première relation 5a: l'opérateur réel 20 repose sur l'objet réel 3a,
- seconde relation 5b : l'objet réel 3' repose sur l'objet réel 3a,
- troisième relation 5c : l'opérateur réel 20 tient l'objet 3c.

Les relations ici retenues sont des relations géométriques de positionnement relatif. Elles peuvent aussi inclure des comportements de type mécanique modélisant par exemple le contact ou des efforts mutuellement exercés entre les objets. L'exposé se restreint volontairement à ces trois relations pour rester simple et illustratif. D'autres relations ou type de relations pourraient être ajoutées à volonté. Un même objet peut ainsi être impliqué dans une multitude de relations, et participer de plusieurs interactions. Le nombre de relations utilisées et la qualité de description des interactions induites augmente avec la qualité de « rendu réaliste » de l'environnement 1. Cette qualité est essentielle pour assurer le réalisme de la simulation comportementale de l'environnement 1. Un niveau minimum de qualité est nécessaire pour qu'un tel environnement ait de l'intérêt. Il est nécessaire que l'on puisse reconnaître des comportements de l'environnement réel dans l'environnement virtuel pour pouvoir assimiler le second au premier. Ceci est nécessaire pour que les actions simulées dans l'environnement virtuel soient utiles à renseigner sur le comportement prévisible dans l'environnement réel.

Afin de modéliser cet environnement réel, un environnement virtuel 1 est créé. Il est constitué d'enregistrements 2a, 2b, 2c, 4a, 4b, 4c, 19 dans une base de données 21. Les objets virtuels 2 correspondant à un objet réel 3a,3b,3c,20 de l'environnement réel disposent de propriétés géométriques. Ils sont représentables sur une visualisation 22. L'environnement 1 comprend trois objets virtuels 2a, 2b, 2c modélisant respectivement chacun des objets réels 3a, 3b, 3c, un objet virtuel ou opérateur virtuel 19 modélisant l'opérateur réel 20 et trois objets virtuels ou relations virtuelles 4a, 4b, 4c modélisant respectivement chacune des relations réelles 5a, 5b, 5c. Une des caractéristiques essentielles selon l'invention est d'utiliser le même formalisme de l'objet virtuel 2, que l'on détaille plus loin, pour représenter un objet réel 3 ou une relation 5. De plus l'opérateur virtuel 19 ou avatar est lui aussi modélisé par un (ou plusieurs) objet(s) virtuel(s) 2. Ainsi, les interactions de l'opérateur réel 20 sur l'environnement 1 s'effectuent par l'intermédiaire d'un avatar 19 ou opérateur virtuel, qui interagit avec les objets virtuels 2a, 2b, 2c de l'environnement 1 au travers de relations virtuelles 4a, 4b, 4c.

Les interactions entre des objets réels 3 sont des relations réelles 5 entre ces objets 3. La modélisation de ces interactions s'effectue aux moyens de relations virtuelles 4 dans l'environnement virtuel 1. Ces relations virtuelles 4 vont permettre de faire évoluer l'environnement 1, de modifier les objets virtuels 2, en fonction du comportement des objets modélisés par les objets 2 eux-mêmes, lorsqu'ils sont seuls concernés ou par les relations virtuelles 4, lorsque plusieurs objets virtuels 2 interagissent et en fonction des interactions initiées par l'opérateur virtuel 19 contrôlé par l'opérateur 20. L'environnement 1 est graphique en ce qu'il dispose d'une représentation visible 22. La modélisation visant à représenter un monde réel tridimensionnel et ses comportements est avantageusement tridimensionnelle. Cette modélisation est avantageusement complétée par des propriétés intrinsèques aux objets virtuels 2, modélisées au sein des objets virtuels eux-mêmes et par des propriétés faisant intervenir plusieurs objets virtuels 2 interagissant, modélisés au sein des relations virtuelles 4. Ceci confère à l'environnement 1 une dynamique lui permettant d'évoluer en fonction de règles comportementales déterministes. Cette évolution, qui tient compte de l'état instantané de chaque objet virtuel 2, va permettre en fonction des relations virtuelles 4 applicables de modifier l'état de différents objets 2. L'environnement 1 est ainsi réactif. Il est de plus interactif en ce que chaque objet 2 réagit en fonction des sollicitations qu'il subit. L'opérateur 20 peut agir au travers de l'opérateur virtuel 19, en sollicitant un ou plusieurs objets virtuels 2. Ces objets 2 réagissent en fonction des sollicitations subies et des règles de comportements prédéfinies.

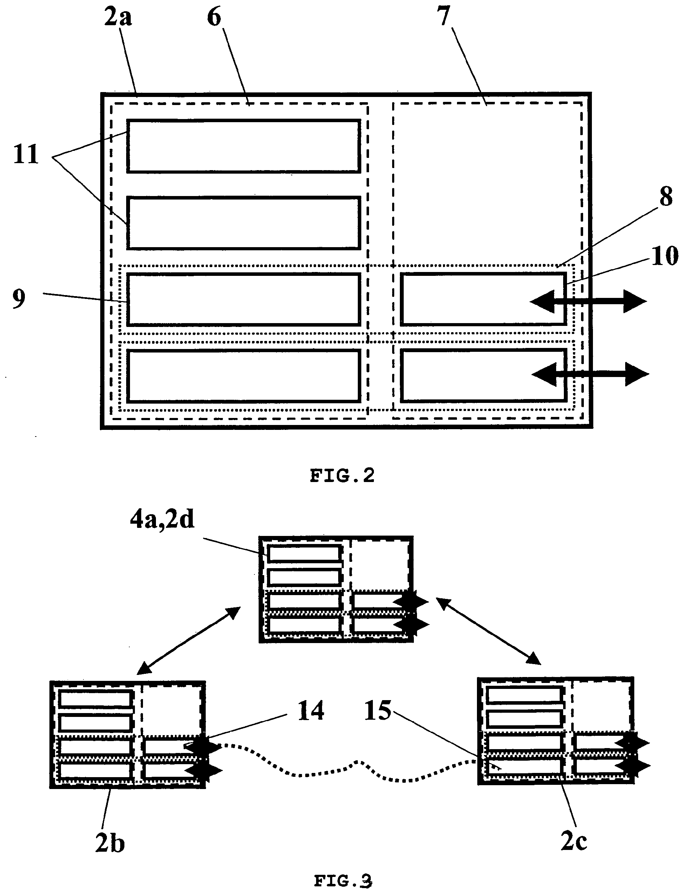

La figure 2 est un schéma d'organisation d'un objet virtuel 2 selon l'invention. Un tel objet virtuel 2 est un enregistrement de données et de programmes. A des fins de modularité et de protection, un objet virtuel 2 est organisé en deux parties 6, 7. La première partie 6 encore dénommée corps 6 contient tous les éléments propres à l'objet virtuel 2. Elle est située à l'intérieur de l'objet virtuel 2 et rien ni personne ne peut accéder à son contenu. La seconde partie 7 encore nommée interface 7 est la seule qui déroge à la règle précédente. Son rôle est de permettre et d'assurer la communication de l'objet virtuel 2 avec le reste de l'environnement 1. Toute communication visant à interroger, à échanger des données, à modifier l'état interne de l'objet virtuel 2 ou à utiliser un de ses services doit obligatoirement transiter par l'interface 7. Certains éléments contenus dans le corps 6 peuvent ainsi rester inaccessibles ou partiellement accessibles pour les autres objets ou opérateurs de l'environnement 1. L'objet virtuel 2 comprend des états ou données pouvant prendre des valeurs et des services ou activités 9, 11 pouvant réaliser des actions. On distingue une activité privée 11, présente dans le corps 6 et ne pouvant être sollicitée et donc ne rendre son service qu'à l'objet virtuel 2 lui-même, d'une activité publique 9 qui grâce à une interface de communication 10 située dans l'interface 7, peut aussi rendre son service à la demande d'un autre objet virtuel 2', 2" de l'environnement 1. Une telle activité publique 9 accompagnée de son interface de communication 10 constitue ce que l'on convient d'appeler une capacité 8.

La figure 3 illustre le principe d'une relation virtuelle 4. Une relation virtuelle 4 est, selon une caractéristique de l'invention, un objet virtuel 2. Sa forme reprend la forme générale d'un objet virtuel 2 tel que décrite ci-dessus. Elle comprend des activités privées 11 et des capacités 8. Son rôle est de régir à une interaction. Lorsque deux, ou plus, objets virtuels 2', 2" sont amenés à interagir, la relation virtuelle intervient et assure l'intermédiaire entre ces objets virtuels. Le principe d'interaction entre ces objets virtuels 2', 2" est exprimé dans la relation virtuelle 4. La relation virtuelle 4 contient tous les éléments, états et actions, nécessaires à la résolution de cette interaction. La relation virtuelle 4 permet ainsi d'indiquer les conditions préalables à une interaction, permettant de la détecter et d'en vérifier la validité. Elle déroule ensuite les actions nécessaires à la réalisation de l'action modélisant l'interaction et produit les conséquences de cette dernière. Elle transmet en tant que de besoin, aux objets virtuels 2',2" interagissant, les différents paramètres leur permettant de réactualiser leur nouvel état résultant de l'interaction.

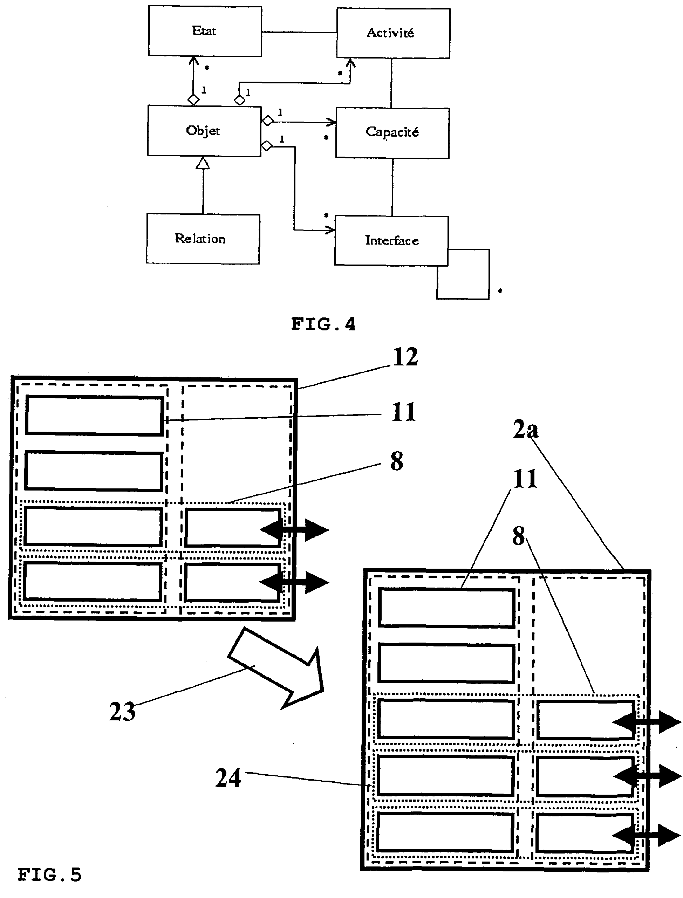

La figure 4 illustre le mode de fonctionnement d'une relation virtuelle entre deux objets et fait partie intégrante de la présente description.

La figure 5 illustre le principe d'héritage entre objets. Il est possible pour tout objet virtuel 2 d'être descendant ou encore enfant d'un objet virtuel supérieur 12 encore nommé objet parent 12. Dans ce cas, la relation d'héritage 23 permet à l'objet virtuel 2 d'hériter de l'ensemble de ses propriétés. Un tel objet enfant possède alors toutes les caractéristiques de l'objet parent. Il en reprend les états, les activités privées 11 et les capacités 8. Il est possible ensuite de particulariser l'objet enfant en lui adjoignant une ou plusieurs caractéristiques (états, activités privées ou capacités) spécifiques 24. Ainsi, par exemple, un objet virtuel véhicule ayant été défini et présentant des caractéristiques d'état de volume, de vitesse maximale, de poids et une capacité de déplacement, pris comme parent 12, peut servir à construire, par héritage, un objet virtuel camion. Cet objet enfant reprend toutes les caractéristiques de son parent. Il peut de plus se voir adjoindre une capacité de fret.

Tous les objets virtuels 2 peuvent ainsi être hiérarchiquement liés à des objets virtuels parents 12. Une des caractéristiques essentielles de l'invention, consistant à utiliser le formalisme des objets virtuels pour représenter les relations virtuelles, devient ainsi en combinaison avec les possibilités d'héritage, un avantage remarquable. Une relation virtuelle 4 étant un objet virtuel 2, comme ceux qu'elle manipule, possède des propriétés de hiérarchisation et d'héritage. Une relation virtuelle 4 peut contrôler et raisonner sur d'autres relations, et ainsi diviser son action en sous-traitances spécifiques.

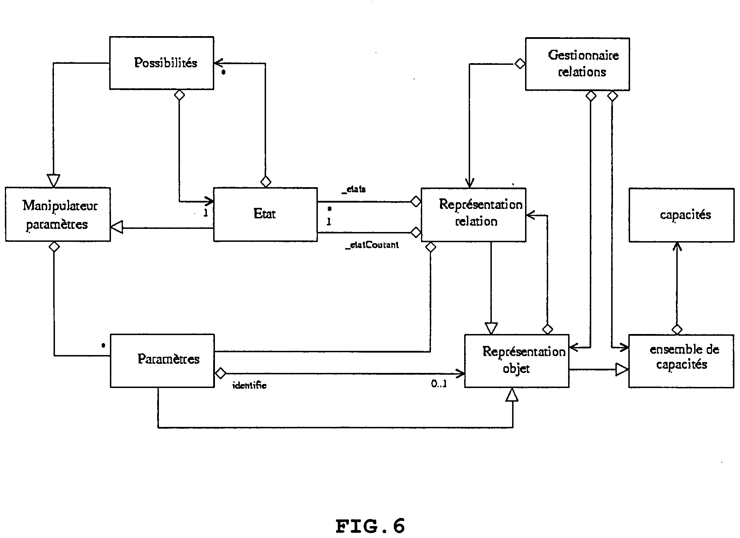

Une des caractéristiques importantes selon l'invention est la présence dans l'environnement 1 d'un gestionnaire de relations 18. La figure 6 présente le mode de fonctionnement du gestionnaire de relations entre deux objets potentiellement interagissants et fait partie intégrante de la présente description.

Le gestionnaire de relations 18 est un processus centralisé. Le rôle du gestionnaire de relations 18 est de détecter les interactions entre les objets virtuels 2 et de suivre la réalisation de cette interaction. Pour ce faire, le gestionnaire de relations 18 utilise les caractéristiques d'interaction définies dans les relations virtuelles 4. Pour une relation donnée, le gestionnaire 18 détecte si les conditions initiales d'une interaction, définies dans la relation virtuelle 4, sont réunies et pour quels objets virtuels 2 elles sont réunies. Pour cela, le gestionnaire de relations 18 détecte, au sein des objets 2 potentiellement interagissant, des capacités associables 14, 15. Un exemple de capacités associables est pour un premier objet virtuel de posséder une capacité de vis alors qu'un second objet possède une capacité d'écrou. La détection s'effectue en effectuant pour tous les objets virtuels, l'intersection des capacités communes à ces objets. Le gestionnaire de relations 18 détermine ainsi la liste des interactions, et associe à chacune la relation virtuelle 4 correspondante pour chaque paire de capacités ainsi associables 14, 15. Dans ce cas le gestionnaire de relations 18 identifie ces deux objets comme potentiellement interagissant. Il vérifie alors que l'interaction est possible, en vérifiant que les conditions initiales sont réunies. Ici, par exemple, vérification est faite que le diamètre de la vis est compatible avec le diamètre de l'écrou et que les deux objets sont positionnés correctement en regard. L'interaction est alors possible. Si elle est souhaitable et effectivement commandée, le gestionnaire de relations 18 assure alors le déclenchement de l'interaction. L'action d'interaction 16 correspondant au fait que l'interaction est exécutée conformément aux informations d'exécution présentes dans la relation virtuelle 4.

A titre illustratif, on va décrire en détail la mise en oeuvre des mécanismes génériques précédemment présentés, au moyen d'un exemple concret d'utilisation. L'exemple illustre une implémentation possible pour visser deux objets virtuels 2 entre eux. On utilise pour ce faire deux relations virtuelles 4 adaptées à cet exemple : une relation de visserie et une relation de positionnement relatif d'objets tridimensionnels.

On souhaite pouvoir visser ensemble une vis et un écrou dans un environnement tridimensionnel. Les objets, vis et écrou, ne sont connus initialement que par des fichiers décrivant leur forme tridimensionnelle. On veut interagir dans l'environnement tridimensionnel et déclencher le vissage de la vis dans l'écrou. La présente invention concerne les modèles des objets et les modèles des relations capables de manipuler ces objets.

Il est tout d'abord recherché une relation capable de visser la vis et l'écrou conformément au souhait de l'opérateur virtuel 19. Si cette recherche est positive, alors le gestionnaire de relations 18 est en charge de transmettre cet ordre d'exécution à la relation 4 de vissage trouvée.

La recherche de relation s'effectue comme suit :
- le gestionnaire de relations construit la liste de toutes les actions possibles entre ces deux objets. Il fournit une liste cohérente, c'est à dire que cette liste est dépendante de l'état courant des objets. Elle représente l'ensemble des actions réalisables à l'instant de la demande de vissage, entre la vis et l'écrou,
- dans cette liste est recherchée la présence de l'action que l'on souhaite effectuer et si elle correspond bien au domaine recherché, à savoir le vissage,
- on effectue une vérification de la présence de la capacité vissage qui doit être une des capacités de la relation actuellement retenue,
- on dispose alors d'une relation de vissage capable de réaliser l'action de visser entre l'écrou et la vis. Cette action est bien certifiée valide, elle peut être déclenchée,
- le déclenchement effectue une action indiquée dans l'objet relation virtuelle,
- les états des deux objets sont modifiés en conséquence pour refléter le changement subvenu,
- la relation vissage utilise en préalable une relation de position pour faire bouger les deux objets afin de les placer en bonne condition pour pouvoir être vissés. Ce dernier point illustre l'aspect hiérarchique de la modélisation des relations.

L'utilisation d'un tel environnement de modélisation interactif 1 s'applique à tous les domaines nécessitant une simulation comportementale d'un environnement réel, cet environnement n'étant pas nécessairement disponible, pour des raisons aussi diverses que sa dangerosité (champ de bataille, centrale nucléaire,...) son éloignement (espace, surface d'une planète lointaine,...) ou sa disponibilité. Une application particulièrement intéressante est la formation et l'entraînement des équipes de maintenance, notamment dans le cas d'un matériel non disponible ou économiquement difficile à immobiliser (char de combat, station spatiale, porte avion,...). Un tel environnement comportemental et interactif 1, s'il est suffisamment figuratif de l'environnement réel, permet de réaliser un nombre de tâches de maintenance en simulation sans nécessiter l'immobilisation d'un matériel.

## Revendications

1. Méthode de modélisation (1) graphique et comportementale, tridimensionnelle, réactive et interactive d'au moins deux objets réels (3) dans un environnement réel (1) en au moins deux objets virtuels (2) correspondants et modélisant au moins une relation réelle (5) entre ces objets réels (3) en une relation virtuelle (4), **caractérisée en ce que** :
- la relation virtuelle (4) est un objet virtuel (2),
- chaque objet virtuel (2) correspondant à un desdits objets réels (3) ou à ladite relation réelle (5) est de même formalisme et comprend un corps (6), interne à l'objet virtuel (2), caché aux autres objets virtuels (2) et une interface (7) visible des autres objets virtuels (2) et permettant la communication avec ces derniers.

2. Méthode de modélisation (1) selon la revendication 1, **caractérisée en ce que** chacun desdits objets virtuels (2) comprend au moins une capacité (8), comprenant une activité visible (9) située dans le corps (6), utilisable par les autres objets virtuels (2), au moyen d'une interface de communication (10) située dans l'interface (7) définissant des relations que l'objet virtuel (2) peut établir avec d'autres objets virtuels (2).

3. Méthode de modélisation (1) selon la revendication 2, **caractérisée en ce que** chacun desdits objets virtuels (2) comprend au moins une activité cachée (11) située dans le corps (6), définissant des relations internes à l'objet virtuel (2).

4. Méthode de modélisation (1) selon la revendication 2 ou 3, **caractérisée en ce que** chacun desdits objets virtuels (2) est hiérarchiquement lié à un objet virtuel supérieur (12) ou parent, dont il hérite les activités (11) et capacités (8).

5. Méthode de modélisation (1) selon l'une des revendications 1 à 4, **caractérisée en ce qu'**une relation virtuelle (4) établit une relation (13) entre des objets virtuels (2) de l'environnement possédant des capacités associables (14, 15), en réalisant une interaction (16) et en transmettant aux objets virtuels (2) les paramètres nécessaires (17) à l'accomplissement de cette interaction.

6. Méthode de modélisation (1) selon la revendication 5, **caractérisée en ce qu'**elle met en oeuvre un gestionnaire central de relations (18) qui confronte les objets virtuels (2) entre eux afin de détecter les capacités associables (14, 15), indicatives de possibles interactions (13) entre ces objets virtuels (2).

7. Méthode de modélisation (1) selon l'une quelconque des revendications précédentes, **caractérisée en ce qu'**on modélise un opérateur réel (20) par un avatar (19) ou opérateur virtuel (19), interagissant avec les objets virtuel (2) de l'environnement (1) et **en ce que** cet avatar (19) ou opérateur virtuel (19) est un objet virtuel (2) de même formalisme que l'objet virtuel correspondant à un desdits objets réels (3) ou à ladite relation réelle (5).

8. Application d'une méthode de modélisation (1) selon l'une quelconque des revendications 1 à 7 à la formation pour la maintenance de matériels ou de véhicules.

## Patentansprüche

1. Verfahren zur graphischen, verhaltensmäßigen, dreidimensionalen reaktiven und interaktiven Modellierung (1) von mindestens zwei realen Objekten (3) in einer realen Umgebung (1) in mindestens zwei entsprechende virtuelle Objekte (2) und wobei mindestens eine reelle Beziehung (5) zwischen diesen realen Objekten (3) in eine virtuelle Beziehung (4) modelliert wird, **dadurch gekennzeichnet, dass**:
- die virtuelle Beziehung (4) ein virtuelles Objekt (2) ist,
- jedes virtuelle Objekt (2), welches einem der genannten realen Objekte (3) oder der genannten reellen Beziehung (5) entspricht, vom gleichen Formalismus ist und einen, den anderen virtuellen Objekten (2) verborgenen Körper (6) innerhalb des virtuellen Objekts (2) und eine Schnittstelle (7) aufweist, welche für die anderen virtuellen Objekte (2) sichtbar ist und die Kommunikation mit diesen Letzteren ermöglicht.

2. Verfahren zur Modellierung (1) nach Anspruch 1, **dadurch gekennzeichnet, dass** jedes der genannten virtuellen Objekte (2) mindestens eine Fähigkeit (8) aufweist, welche eine sichtbare, sich in dem Körper (6) befindliche Aktivität (9) aufweist, welche von den anderen virtuellen Objekten (2) mittels einer Kommunikationsschnittstelle (10) verwendbar ist, welche in der Schnittstelle (7) angeordnet ist, die Beziehungen definiert, die das virtuelle Objekt (2) mit anderen virtuellen Objekten (2) herstellen kann.

3. Verfahren zur Modellierung (1) nach Anspruch 2, **dadurch gekennzeichnet, dass** jedes der genannten virtuellen Objekte (2) mindestens eine verborgene, sich in dem Körper (6) befindliche Aktivität (11) aufweist, welche Beziehungen innerhalb des virtuellen Objekts (2) definiert.

4. Verfahren zur Modellierung (1) nach Anspruch 2 oder 3, **dadurch gekennzeichnet, dass** jedes genannten der virtuellen Objekte (2) hierarchisch mit einem virtuellen oberen (12) oder verwandten Objekt verbunden ist, von dem es die Aktivitäten (11) und Fähigkeiten (8) verliehen bekommt.

5. Verfahren zur Modellierung (1) nach einem der Ansprüche 1 bis 4, **dadurch gekennzeichnet, dass** eine virtuelle Beziehung (4) eine Beziehung (13) zwischen virtuellen Objekten (2) der Umgebung herstellt, welche verknüpfbare Eigenschaften (14, 15) besitzen, indem eine Interaktion (16) erzielt wird und den virtuellen Objekten (2) die zur Ausführung dieser Interaktion notwendigen Parameter (17) übertragen werden.

6. Verfahren zur Modellierung (1) nach Anspruch 5, **dadurch gekennzeichnet, dass** es eine zentrale Verwaltung von Beziehungen (18) einsetzt, welche die virtuellen Objekte (2) einander gegenüberstellt, um die verknüpfbaren Eigenschaften (14, 15) zu erfassen, welche für mögliche Interaktionen (13) zwischen diesen virtuellen Objekten (2) hinweisend sind.

7. Verfahren zur Modellierung (1) nach irgendeinem der vorhergehenden Ansprüche, **dadurch gekennzeichnet, dass** eine reale Bedienungsperson (20) durch einen Avatar (19) oder eine virtuelle Bedienungsperson (19) modelliert wird, welche mit den virtuellen Objekten (2) der Umgebung (1) interagiert, und dass dieser Avatar (19) oder virtuelle Bedienungsperson (19) ein virtuelles Objekt (2) von gleichem Formalismus wie das virtuelle Objekt ist, welches einem der genannten realen Objekte (3) oder der genannten reellen Beziehung (5) entspricht.

8. Anwendung eines Verfahrens zur Modellierung (1) nach irgendeinem der Ansprüche 1 bis 7 auf die Ausbildung zur Wartung von Materialien oder Fahrzeugen.

## Claims

1. Method for (1) graphic and behavioural, three-dimensional, reactive and interactive modelling of at least two real objects (3) in a real environment (1) as at least two corresponding virtual objects (2) and modelling at least one real relationship (5) between these real objects (3) as a virtual relationship (4), wherein:
- the virtual relationship (4) is a virtual object (2),
- each virtual object (2) corresponding to one of said real objects (3) or to said real relationship (5) is of the same formalism and comprises a body (6), internal to the virtual object (2), hidden from the other virtual objects (2) and an interface (7) visible to the other virtual objects (2) and enabling them to communicate with each other.

2. A modelling method (1) according to Claim 1, wherein each of said virtual objects (2) comprises at least one capacity (8), comprising a visible activity (9) located in the body (6), able to be used by the other virtual objects (2), by means of a communication interface (10) located in the interface (7) defining the relationships which the virtual object (2) may establish with other virtual objects (2).

3. A modelling method (1) according to Claim 2, wherein each of said virtual objects (2) comprises at least one hidden activity (11) located in the body (6), defining the relationships internal to the virtual object (2).

4. A modelling method (1) according to Claims 2 or 3, wherein each of said virtual objects 2) is hierarchically linked to a superior or parent virtual object (12), whose activities (11) and capacities (8) it inherits.

5. A modelling method (1) according to one of Claims 1 to 4, wherein a virtual relationship (4) establishes a relationship (13) between virtual objects (2) of the environment that have associable capacities (14, 15) by forming an interaction (16) and by communicating the parameters (17) necessary to accomplish this interaction to the virtual objects (2).

6. A modelling method (1) according to Claim 5, wherein it implements a central system to manage the relationships (18) which oppose the virtual objects (2) so as to detect the associable capacities (14, 15) indicative of possible interactions (13) between these virtual objects (2).

7. A modelling method (1) according to any one of the previous Claims, wherein a real operator is modelled as an avatar (19) or a virtual operator (19), interacting with the virtual objects (2) of the environment (1) and wherein this avatar (19) or virtual operator (19) is a virtual object (2) of the same formalism as the virtual objects corresponding to one of said real objects (3) or to said real relationship (5).

8. Application of a modelling method (1) according to any one of the above Claims 1 to 7 to equipment or vehicle maintenance training.
